# EUROPEAN PATENT SPECIFICATION

(11) **EP 3 308 948 B1**
(45) Date of publication and mention of the grant of the patent: **02.08.2023**
(21) Application number: 16193719.8
(22) Date of filing: 13.10.2016
(51) Int. Cl.: B29D 23/00, B29C 63/02, B29L 31/52, B29L 31/30, B29K 105/08

(54) **MANUFACTURING A MOLDED HOSE**
HERSTELLUNG EINES GEFORMTEN SCHLAUCHS
FABRICATION D'UN TUYAU MOULÉ

(43) Date of publication of application: 18.04.2018
(73) Proprietor: Silent Wind GmbH, 48167 Münster (DE)
(72) Inventor: STIEWE, Peter, 31535 Neustadt (DE); ULMER, Frank, 11500 Negombo (LK)
(74) Representative: Ter Meer Steinmeister & Partner

(56) References cited:
- EP-A1- 2 468 484
- EP-B1- 2 279 074
- EP-B1- 2 650 094
- AU-A4- 2012 101 666
- GB-A- 227 373
- GB-A- 668 876
- US-A1- 2008 265 468
- US-A1- 2012 312 848

## Description

### FIELD OF THE INVENTION

The invention is related to a method for manufacturing a molded hose, an inflatable molded hose and a tube that can be used for a great variety of applications, such as tents, kites, heating/cooling/water installations and so on.

The molded hose is lightweight and provides a dimensionally stable shape in a first condition. Further, the molded hose may be a flexible tube in a second condition of said hose. Thus, in an inflated state of the molded hose, the hose provides a predefined complex shape, e.g. with predefined curvatures and changing diameters in its longitudinal alignment.

The manufactured molded hose may be dimensionally stable in an inflated state without further additional housings or the need of additional bridles.

### BACKGROUND OF THE INVENTION

A hose is a flexible hollow tube normally designed to carry fluids from one location to another. Hoses are also sometimes called pipes. The word "pipe" usually refers to a rigid tube, whereas a hose is usually flexible. The shape of a hose is usually cylindrical.

Molded hoses are widely used nowadays in a plurality of different applications. The molded hose may obtain a high degree on complexity, which makes it challenging to produce such hoses in mass-production in an efficient manner. Different manufacturing methods exist to produce such molded hoses.

Complex shaped hoses may be manufactured using a two-piece mold and gluing the resulting two pieces afterwards. Such a construction usually lacks on stability, since - at least under mechanical stress, such as applied force or pressure - the splice is a weak spot. To increase stability, higher weights or lowered mechanical stress needs to be expected.

Alternatively, the molded hose is built from a flat material that is welded or seamed to form a hose. Especially, the spanwise or lengthwise closing seam of such a hose is a pressure-limiting factor. So, the welded or seamed area of the hose is a weak spot that limits the stability of the hose to a great extend.

It is desirable to provide a molded hose that provides very high form stability irrespective of a load situation. Thus, it is an object to manufacture the molded hose in a monolithic fashion to not interrupt the mechanical structure of the material and to avoid unnecessary weak spots in the material of the molded hose caused by seams. To achieve an even better pressure resistance, these hoses can be reinforced with fibers or steel cords. Commonly used reinforcement methods are braiding, spiraling, knitting and wrapping of fabric plies. The reinforcement may increases the pressure resistance but also increases the stiffness. To obtain flexibility, corrugations or bellows are used. Usually, circumferential or helical reinforcement rings are applied to maintain these corrugated or bellowed structures under internal pressure. However, this reinforcement increases the overall weight of the hoses and the stiffness. So these hoses cannot be used for a great variety of applications as desired.

For a monolithic fashioned manufacturing of such form stable hoses, a suitable core concept needs to be found. The core can be separated from the manufactured hoses by the use of drafts and thermal shrinkage. In case, the core is rotationally symmetrical, the separation of the core from the hose may be challenging.

Document EP 2 650 094 A1 discloses a manufacturing of a preform for further processing into a resin-containing composite precast component. The manufacturing method comprises the forming of a core and a directly covering of the core with a fiber-comprising material and a binder material. Subsequently the structure of at least the core, the fiber material and the binder is heated for fixing the fabric material. Subsequently the fixed and intermediately cured preform of fiber-material is extracted and the core is removed from the intermediately cured preform. This preform is already stiffened after the provision of heat and so, the preform cannot be transported easily and cannot be applied to an intended use easily, e.g. for outdoor activities, such as sailing, kiting, camping or cannot be applied at places that are difficult to reach, such as cooling/heating/water installations or vehicles/planes, where the space for appliance/exchange of such a molded hose is very limited. Furthermore, the described covering of the core with the fiber-material heavily increases production time and so the production output is reduced.

GB 227 373 A discloses a method for manufacturing of a hose pipe made of rubber. An inflated mandrel is coated with a rubber solution to form an inner layer of the pipe. When this layer is dry, a braiding is applied in a suitable machine whereupon another layer of rubber is added. This is repeated to attain the required thickness. The mandrel is deflated and afterwards the pipe can be vulcanized in heated molds.

GB 668 876 A discloses a method for manufacturing of an inflatable conduit core. A mandrel is coated with rubber and a sheath of cord is directly braided around the mandrel whilst the rubber is in an uncured or tacky state. Then the sheath is coated with a layer of rubber cement to wet the sheath. Then a rubber sheath is applied as a continuous strip by helically wrapping. This rubber sheath is then heat treated. The core is cured, and the mandrel is removed. However, the cord is loosened with the surrounding rubber to give a free working restricted sheath surrounding the inner rubber tubing.

AU 2012 101 666 A4 discloses method for manufacturing of a flexible braided garden hose. Inner and outer layers are made of extruded polymer thermoplastic material, while the reinforced layers are made of polyester yarns. A reinforced layer has a first plurality of textile yarns superimposed on a second plurality of yarns using a braiding machine with two consecutive counter-rotating braiding units.

US 2008/0265468 A1 discloses a method of manufacturing paint roller covers. A seamless, tubular fabric sleeve has a backing yarn material of lower melting temperature than the outwardly facing pile material of said tubular fabric sleeve.

EP 2 468 484 A1 presents a method that involves undetachably covering a set of reinforced fibers with a flexible sealing agent to form a reusable tubular mold body. The body is inflated up to a preset pressure. The inflated body is surrounded by a layer of another set of reinforced fibers and placed in a multilayered mold. Resin i.e. thermoplastic or du-roplastic resin, is applied into the body, and temperature is increased until the resin is cured. The pressure is released from the body, and the mold is opened. A fiber composite component is removed from the mold, and the body is removed from the component. The fibers are carbon fibers, aramide fibers and/or glass fibers. A mold body comprising an elastomer casing is also disclosed.

So it is an object of the present application to provide a molded hose having a complex shape, e.g. a plurality of different curvatures or diameters along a longitudinal alignment that provides maximal strength and being form stability. The hose should be manufactured easily, quickly. The hose should be small weighted, easy to be transported and easy to be installed or applied.

### SUMMARY OF THE INVENTION

The above identified objects are solved by the features of the independent claims. Further advantageous embodiments are derived from the respective dependent claims.

In an aspect of the present invention, a method for manufacturing a molded hose is provided. This method comprising the following steps: (i) applying a braided hose and a heat activated adhesive onto an inflatable positive mold structure; (ii) applying heat to the heat-activated adhesive to activate the adhesive for fitting and setting the shape of the braided hose to an outer shape of the positive mold structure; and (iii) removing the positive mold structure for obtaining the molded hose that is dimensionally stable in a first condition of the molded hose, wherein the outer shape of the positive mold structure defines the shape of the manufactured molded hose in the first condition.

In the first condition of the molded hose, the hose comprises a complex shape that is dimensionally stable irrespective of a load situation that is applied to the molded hose.

Preferably, the first condition is obtained when the tube is inflated with a compressed fluid. The compressed fluid is preferably compressed air or a high pressure gas. In fluid mechanics, compressibility is the measure of the relative volume change of a fluid as a response to a pressure change. The volume of the compressed air or gas might strictly be limited to the inner dimensions of the molded hose. So, the material that forms the tube body has to be robust to withstand the high pressure forces of the compressed fluid. Preferably, said molded hose being inflated with a pressure of at least 103.42 kilopascals (i.e. 15 pounds per square inch), more preferably more than 137.9 kilopascals (i.e. 20 pounds per square inch). The high amount of pressure in the molded hose leads to an enormous form stability without additional measures.

The positive mold structure is used to mold the braided hose under appliance of heat. This molding is the process of manufacturing by shaping the braided hose raw material using a rigid frame called the mold structure. The positive mold structure is a block that is covered with the braided hose raw material. Under appliance of heat, the braided hose is adopting its shape to the outer shape of the positive mold structure.

The positive mold structure is inflatable to allow an easy removing after being deflated.

Using the inventive manufacturing will lead to a more robust molded hose in the first condition that has a reduced weight compared to solid stiffing members. In this first condition, the molded hose may be regarded as a "pipe" or a "tube" that is pressure-resistant and temperature resistant. In this first condition the hose is a hollow body formed by the braided hose material that is fitted and glued with the heat reactive adhesive during heat appliance.

Preferably, in its first condition, the molded hose has a circular cross-section that may be varied over the longitudinal alignment of the molded hose, such as being of conical form and that comprises a plurality of different predefined curvatures.

In a second condition of the molded hose, the molded hose is flexible so it can be transported easily and can be applied in difficult places, such as heating/cooling/water installations. The second condition is preferably a deflated state of the molded hose.

So, the molded hose according to the invention is a flexible tube in a second condition, e.g. a deflated state of said hose and it is dimensionally stable in a first condition, e.g. an inflated state.

The use of a braided hose as a raw material allows mass-production with high output rates and reduces manufacturing costs. The braided hose can be made by running yard using automated manufacturing processes such as extrusion, blow-molding or fabric braiding.

The braided hose encases the positive mold structure and fits to the outer shape of the positive mold structure after appliance of heat.

The braided hose is a hose that comprises a braid. A braid (also referred to as a plait) is a complex structure or pattern formed by interlacing strands of flexible material such as yarns or wire. A braid may be long and narrow, with each component strand functionally equivalent in zigzagging forward through the overlapping mass of the others. The most common braid is a flat, solid, three-stranded structure. More complex braids can be constructed from an arbitrary number of strands to create a wider range of structures.

The braided hose is temperature-stable and after fitting and setting to the outer shape of the positive mold structure, the braided hose is temperature resistant. Thus, the molded hose can be used in applications within high temperature ranges. Thus, the molded hose can be used for high temperature application, for instance in a heating application. The resulting molded hose can be adapted to its specific field of use very comfortable. The heat activated adhesive cures once and is not activated during following heat exposure of the molded hose.

The braided hose is pressure stabile. Thus, if filled with a high-pressure fluid, such as air or gas, the braided hose will be the main load and pressure holding part of the molded hose.

The braided hose adapts its shape due to its ability to adjust itself in diameters and length to the positive mold structure in an easy manner.

Thus, the resulting molded hose can be used for a great variety of applications without limitations, such as weight, shape, temperature form-stiffness in a second condition and so on.

In a preferred embodiment, the braided hose is made of yarn. Yarn is a long continuous length of interlocked fibers, suitable for use in the production of the braided hose by sewing, crocheting, knitting, weaving, and embroidery in mass production fabric manner. A thread is a type of yarn intended for sewing by machine. Modern manufactured sewing threads may be finished with wax or other lubricants to withstand the stresses involved in sewing. Embroidery threads are yarns specifically designed for machine embroidery.

In a preferred embodiment, the yarn comprises an adhesive outer layer, so that each yarn of the braided hose is bonded to at least one neighboring yarn after the appliance of heat to activate the heat-activated adhesive. So, the braided hose is kept in a desired shape, predefined by the positive mold structure.

In a preferred embodiment, the braided hose comprises a low melting bonding yarn. For instance, low melting bonding yarn is twisting with polyamide threads or polyether sulfone threads or glass fiber. The low melting adhesive bonding yarn, when heated, will melt and bond, leaving the non fusible carrier thread keep its mechanical strength for holding the textile structure together.

For instance, GRILON^{®} fusible bonding/adhesive yarns are low melt nylon; copolyamide and low melt co-polyester multi-filaments used for technical applications. These low melting fusible yarns are also referred to "low melt threads"; "bonding threads", "thermoformable yarn"; "fusion yarns" and are available in various melting points, e.g. 60 to 160 degree Celsius per 23 to 1100 dtex. Tex is a unit of measure for the linear mass density of fibers, yarns and thread and is defined as the mass in grams per 1000 meters. The most commonly used unit is actually the decitex (abbreviated: dtex), which is the mass in grams per 10000 meters. These yarns provide a high force and pressure stability and have very low own weight. Such low melting bonding yarns can be stitched, knitted or woven. It is thus possible to use them precisely and effectively. When the correct amount of heat is applied to the low melting point GRILON^{®} yams, they melt and become a bonding and adhesive agent. GRILON^{®} bonding/ adhesive yarns may preferably be made of low melt fusible bonding yarn twisted with normal melting point polyamide or polyester carrier thread.

In another aspect, a method for manufacturing a molded hose is provided. This method comprising the following steps: (i) applying a thermoformable material onto an inflatable positive mold structure; (ii) applying heat to the thermoformable material for fitting and setting the shape of the thermoformable material to the outer shape of the positive mold structure; and (iii) removing the positive mold structure for obtaining the molded hose that is dimensionally stable in a first condition of the molded hose, wherein the outer shape of the positive mold structure defines the shape of the manufactured molded hose in the first condition.

The molded hose preferably can be put in the first condition and the second condition as described above.

So, the molded hose is obtained by thermoforming as a manufacturing process where the thermoformable material is heated to a pliable forming temperature and is formed to the outer shape of the positive mold structure. The thermoformable material is heated to a high-enough temperature that permits it to be stretched into or onto the positive mold structure and cooled to a finished shape.

The usable temperature range may be lower compared to sole braided hose based molded hose as described above but the thermoformable material allows higher flexibility when in the second condition due to less stiffness of the material.

In a preferred embodiment, the thermoformable material is provided in tube-form or as a flat material that is welded to a tube prior being applied on the positive mold structure. By appliance of heat to the welded flat material, the mechanical strength of the hose is increased.

In a preferred embodiment, the thermoformable material comprises a heat shrink material, such as a polymer or polyolefin to fit and set the shape of the thermoforming material to the outer shape of the positive mold structure.

In a preferred embodiment, the thermoformable material comprises a hot-melt adhesive, preferably for bonding a first layer of thermoformable material to a second layer of a braided hose of the molded hose. So, the thermoformable material is melting at 80 to 160 degree Celsius.

In a preferred embodiment, the positive mold structure comprises a shrinkable, preferably deflatable, element for reducing the dimensions of the outer shape of the positive mold structure and wherein the removing of the positive mold structure includes shrinking, preferably deflating the positive mold structure.

Preferably, the positive mold structure material is Dacron^{®}, Polyester or Nylon material.

In a preferred embodiment, the positive mold structure at least partly comprises one or more of the following shapes: (i) a region having a first predefined bending in its longitudinal alignment; (ii) a region having a second predefined bending, preferably being located at an end of the mold structure, more preferably wherein the second predefined bending is directed to a direction different to the direction of the first predefined bending; (iii) a region with a changing diameter across the longitudinal alignment of the mold structure; and/or (iv) a cone-shaped region.

The portions/region of different shapes can have different directions and be conical at the same time. Predefining each curvature of the hose or pre-curved hose hereinafter is referred to a substantially fixed radius value at which said hose is curving around. The term "curvature" is similar to the term "bending". The defined curvature is related to the molded hose in its first condition, e.g. an inflated state. The hose is preferably a machine-made mass product and its predefined curvature comprises the same radius over a predefined section of said hose. The predefined curvature should at least be 80 percent of the resulting curvature under load situations, wherein the remaining up to 20 percent might be adjusted by additional bridles or another additional measure. So, complex structures of molded hoses can be obtained in an easy manner.

In a preferred embodiment, a first layer of a braided hose or a thermoformable material is applied to the positive mold structure then the heat is applied for fitting the shape of the first layer to the outer shape of the positive mold structure then a second layer is applied to the first layer; and then heat is again applied to the second layer for fitting the shape of second layer to the shape of the first layer and bonding them together. Alternatively, the heat may be applied only once after applying the second layer.

The appliance of layers of braided hose and/or thermoformable material is advanta-gous in that the strength of the molded hose is increased which leads to higher robustness in the first condition. Furthermore, the appliance of an additional layer may lead to a more flexible hose in a second condition, e.g. if transported or installed.

In a preferred embodiment, the second layer is an air tight barrier layer, a braided material layer and/or a thermoformable material layer. The air tight barrier may be an inner bladder of the molded hose that is applied before or after appliance of heat. The air tight barrier avoids that compressed fluid, from inside of the molded hose can escape to the outside of the molded hose in an uncontrolled manner.

In a preferred embodiment, the molded hose further comprises endcaps and/or valves to form an inflatable tube. So, the molded hose can be placed in the first condition by inflating the molded hose via the valves with compressed fluid and can be placed in the second condition by deflating the molded hose via the valves for easy transportation, installation or replacement.

In a preferred embodiment a negative mold structure is applied before appliance of the heat activated adhesive. The negative mold structure is applied additionally to the positive mold structure to increase the pressure during the adhesive appliance process.

Alternatively to a negative mold structure a vacuum bag process is used to apply pressure during the heating and curing process. In this vacuum bag process the prepared layup of the braided hose over the inner mold structure is put into an airtight bag. A vacuum pump is used to remove the air and to create a vacuum. This pressurizes the layers.

In an aspect of the present invention, an inflatable molded hose manufactured as described above is provided and is used for kites; paragliders; heating or cooling installation; water installation; vehicles; airplanes; tents; and/or household appliances. All these applications require molded hoses with complex shapes that are form-stable, light and easily installable.

In an aspect of the present invention, a tube is provided that comprises an inflatable molded hose that is manufactured as described above, wherein a positive mold structure for manufacturing the hose is a part of the tube system; and wherein the molded hose being dimensionally stable in its inflated state to bring the tube in a predefined form independent on a load situation. Preferably the molded hose is used as a part of a front tube of a kite.

### BRIEF DESCRIPTION OF THE DRAWINGS

In the following exemplary embodiments of the invention are described with reference to drawings.

The same reference signs in different drawings indicate the same elements or at least the same functions unless otherwise stated.
Fig. 1 shows an exemplary embodiment of a process flow of a method for manufacturing a molded hose according to the invention;
Fig. 2 shows an exemplary embodiment of a process flow of a method for manufacturing a molded hose according to the invention;
Fig. 3a-3f show an exemplary embodiment of a manufacturing process of a molded hose according to the invention;
Fig. 4 shows an exemplary embodiment of a molded hose manufactured according to the invention;
Fig. 5a-5c show an exemplary embodiment of a manufacturing process of a molded hose according to the invention;
Fig. 6 shows an exemplary embodiment of a molded hose manufactured according to the invention;
Fig. 7 shows an exemplary embodiment of a molded hose manufactured according to the invention; and
Fig. 8a-8b show an exemplary embodiment a manufacturing process of a molded hose according to the invention.

### DETAILED DESCRIPTION OF THE PREFERRED EMBODIMENTS

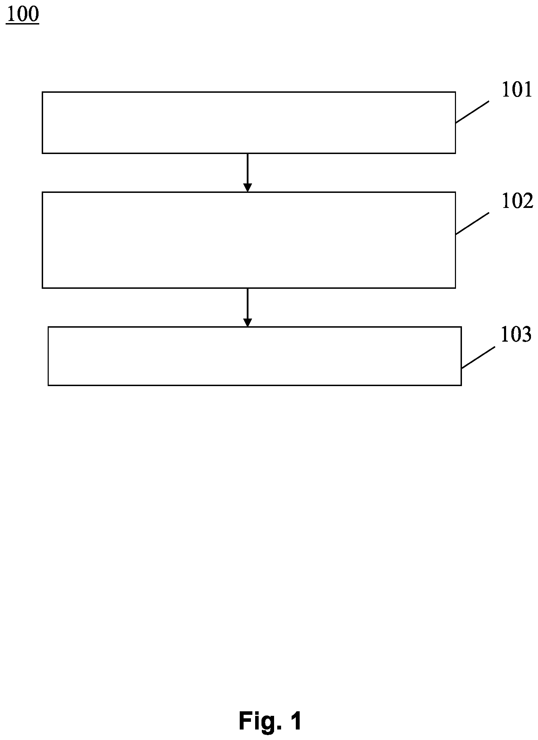

Fig. 1 shows an exemplary embodiment of a process flow of a method 100 for manufacturing a molded hose 8 according to the invention. The method 100 for manufacturing the molded hose 8 comprises a step 101 for applying a braided hose 2 and a heat activated adhesive 3 onto an inflatable positive mold structure 1. The method 100 for manufacturing the molded hose 8 comprises a step 102 for applying heat to the heat-activated adhesive 3 to activate the adhesive 3 for fitting and setting the shape of the braided hose 2 to an outer shape of the positive mold structure 1 and a step 103 for removing the positive mold structure 1 for obtaining the molded hose 8 that is dimensionally stable in a first condition of the molded hose 8, wherein the outer shape of the positive mold structure 1 defines the shape of the manufactured molded hose 8 in the first condition.

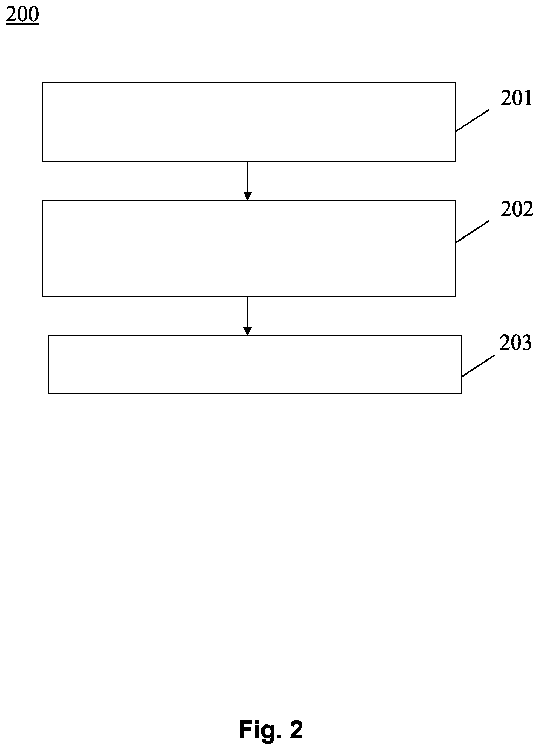

The effects and advantages of the Fig.1 will be described when discussing Fig.2.

Fig. 2 shows an exemplary embodiment of a process flow of a method 200 for manufacturing a molded hose 8 according to the invention. The method 200 for manufacturing the molded hose 8 comprises a step 201 for applying a thermoformable material 4 onto an inflatable positive mold structure 1. The method 200 for manufacturing the molded hose 8 comprises a step 202 for applying heat for fitting and setting the shape of the thermoformable material 4 to an outer shape of the positive mold structure 1 and a step 203 for removing the positive mold structure 1 for obtaining the molded hose 8 that is dimensionally stable in a first condition of the molded hose 8, wherein the outer shape of the positive mold structure 1 defines the shape of the manufactured molded hose 8 in the first condition.

The method 100 according to Fig.1 and the method 200 according to Fig.2 lead to the manufacturing of the molded hose 8 that is dimensionally stable in the first condition. The first condition is an inflated state of the molded hose 8 in that a compressed fluid, such as a high-pressure air or gas of at least 103.42 kilopascals (i.e. 15 pounds per square inch) is arranged inside the molded hose 8. The dimensionally stable hose 8 can be applied in a huge variety of applications.

For instance, the molded hose 8 can support a sail of a kite in that an aerodynamic profile of the sail results by tensioning a canopy over a tube system that is built by using the molded hose 8 as a front tube and/or an at least one strut. The aerodynamic profile of the sail has to be formed with predefined bendings of different radius values in different sections and thus results in a complex shape that cannot be produced easily with conventional methods. In particular the aerodynamic profile has a negative dihedral form. The dimensionally stable molded hose 8 in its first condition decreases the material requirements for weight and robustness of a sail of a conventional kite. Due to its high stability, the resulting shape of the molded hose 8 in the first condition is independent on a load situation that is applied at the sail of the kite. Using the molded hose 8 for the kite as manufactured herein will lead to a relaxing of material requirements of the canopy material enormously and allows necessary seams of the canopy for encasing the molded hose 8 to be much weaker than compared to seams of conventional kites. In fact, the used material for the canopy and/or a chamber incorporating the molded hose 8 can be much lighter which decreases the weight of the kite and increases the flight-properties of the kite. The molded hose 8 may be replaced from the sail/canopy easily. Thus, the canopy can now be provided with different tube systems having differently shaped or differently dimensioned mold hoses 8 which increases flexibility and reduces repair-costs if the kite is damaged. It is possible to provide different mold hoses 8 having different mold hose diameters to equip existing canopies of different canopy sizes in an enormous flexible manner.

In another application, the molded hose 8 can be a part of a frame of a tent, preferably inflatable pole supports, also known as airbeams. So, the molded hose 8 serves as a part of a rigid structural supports when used in its first condition and is soft, light and pliable when deflated and can therefore be transported easily. The molded hose 8 may be composed in a fabric sleeve that - due to the dimensional stable behavior of the molded hose 8 itself - can now be manufactured much weaker compared to conventional airbeams comprising tents. Depending on the desired tent size, the molded hose 8 for forming airbeams can be anywhere from 5.08 to 101.6 centimeter (i.e. 2 to 40 inches) in diameter, inflated to different pressures, such as high pressures with 275.79 to 551.58 kilopascals (i.e. 40 to 80 pounds per square inch) that may be filled by compressors or low pressure airbeams with 34.47 to 48.26 kilopascals (i.e. five to seven pounds per square inch) that are preferred for recreational use. Due to its shape stability, the molded hoses 8 in the first condition will be dimensional stable independent on the load situation, such as strong wind or rain. The resulting airbeams have the unique quality of bending, rather than breaking, when overloaded. The airbeam that comprises the molded hose 8 is usually integrated into the tent shell such that no reinserting every time setup occurs is necessary, but can be replaced if damaged. Airbeams can be located on either the inside or outside of the tent shell. Using the inventive manufacturing methods 100, 200, the molded hose 8 will be very light and can easily be transported in a second condition.

In another application, the inventively manufactured molded hoses 8 may be applicable in heating/cooling/water installations, due to its high temperature robustness. If the braided hose 2 is used the temperature robustness is even higher.

In another application, the inventively manufactured molded hoses 8 may be applicable in vehicles/planes, due to its high robustness in the first condition and due to its high flexibility in the second condition.

When using the methods 100 and 200 of Fig. 1 and Fig.2, a seamless molded hose 8 is obtained. Due to the positive mold structure 1, there is no shape limitation and complex shape structures are built easily, e.g. bending of different directions and different radius values and different diameters in different cross-sections of the molded hose 8. The raw mate-riel of the braided hose 2 or the thermoformable material 4 can be made by the running yard using automated manufactured processes such as film extrusion, blow molding and/or braiding.

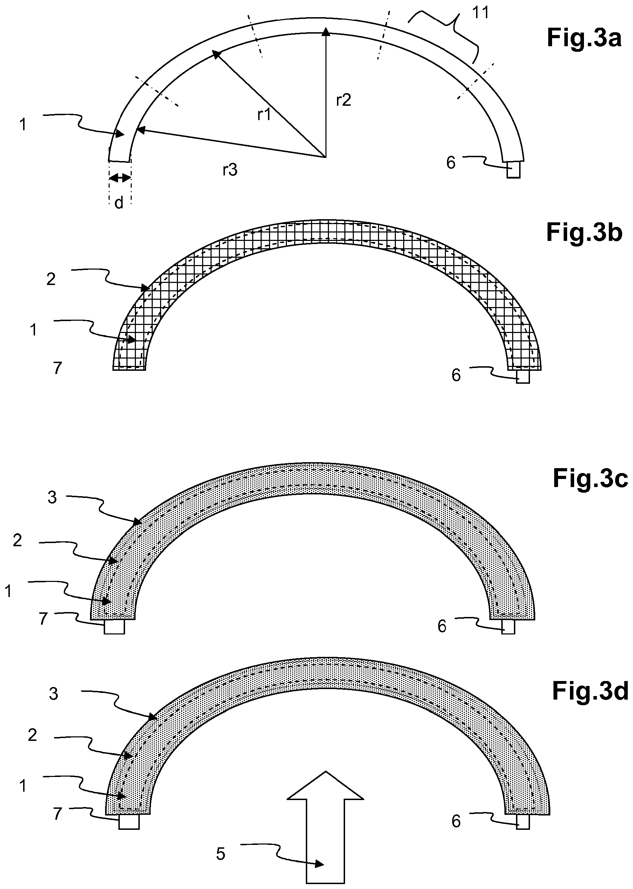

In Fig. 3a to 3 an exemplary embodiment of a manufacturing process of a molded hose according to the invention is shown.

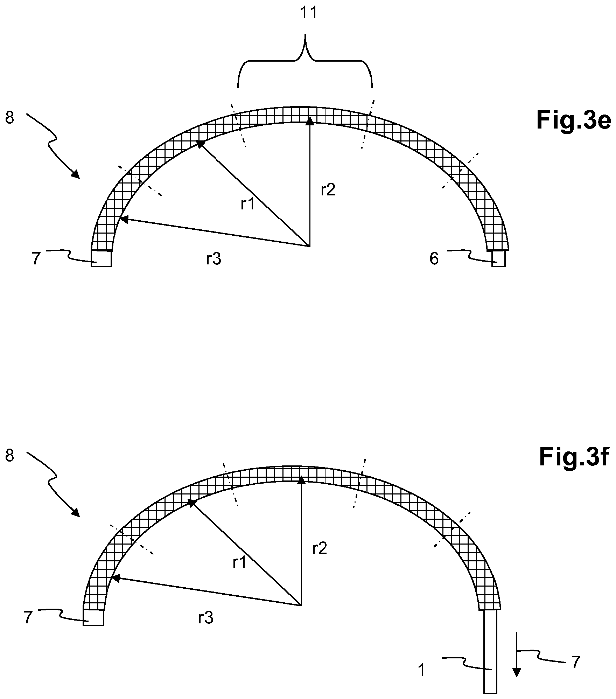

In Fig.3a an exemplary embodiment of a positive mold structure 1 is shown. The positive mold structure 1 comprises five regions 11. Each region comprises a different predefined bending. The left region of the positive mold structure 1 has a bending of a radius r3. The region next to the left region of the positive mold structure 1 has a bending of a radius r1. The middle region of the positive mold structure 1 has a bending of a radius r2. The radiuses r1, r2 and r3 have different values. The resulting bendings may be formed in different directions. According to Fig.3, the positive mold structure 1 comprises a constant diameter d in a cross-section all over its longitudinal alignment. Alternatively, also the diameter d may change over the different regions or over the longitudinal alignment of each region or over the longitudinal alignment of the positive mold structure 1. The mold structure 1 is inflatable and therefore comprises a valve 6. The valve 6 can be in an open position for filling air/gas into the positive mold structure 1 or in a closed position to keep the air/gas inside the mold structure 1. The positive mold structure 1 is of Dacron^{®}, Polyester or Nylon material.

In Fig.3b, a braided hose 2 is applied to the positive mold structure 1. The braided hose 2 may comprise hot-melt yarn as described above. The braided hose 2 may be provided as a raw material having a flat (2D) shape or being a hose and may be obtained by an automatic braiding process. The braided hose 2 is then applied to the positive mold structure 1 in since the outer diameter of the positive mold structure 1 is smaller than the inner diameter of the braided hose 2 and thus can be applied in quick and easy manner. So, the braided hose 2 encases the mold structure 1. The braided hose 2 comprises interlacing strands of flexible yarn material, e.g. a low melting bonding yarn such as GRILON^{®} fusible bonding/adhesive yarns with melting points between 60 to 160 degrees Celsius per 23 to 1100 dtex.

In Fig.3c, a heat-activated material 3, also referred to as hot-melt adhesive, is applied to the positive mold structure 1 and/or the braided hose 2. The heat-activated material 3 can be applied to the braided hose 2 prior applying the braided hose 2 onto the mold structure 1. Afterwards a valve 7 may be applied into the positive mold structure. However, the valve 7 may be applied to the manufactured hose 8 at a later stage as well.

In Fig.3d, heat is applied to the arrangement in order to activate the heat-activated adhesive 3. The heat-activated adhesive 3 may require a defined period of time at elevated temperatures to achieve a final bonding strength. Temperature, pressure and dwell time are used to affect a final cure and bond. The heat temperature is dependent on the braided hose material and may be between 60 to 160 degrees. The adhesive 3 provides several advantages over solvent-based adhesives, since volatile organic compounds are reduced or eliminated, and the drying or curing step is eliminated. The heat activated adhesives 3 have long shelf life and usually can be disposed of without special precautions. The heat activated adhesive 3 cures once and is not activated during following heat exposure of the molded hose 8.

By applying heat, the shape of the braided hose 2 is set and fit to the outer shape of the positive mold structure 1. This means that the raw material is reshaped by the use of heat and this shape is saved by using the adhesive 3. This fitting and setting of the shape may be a shrinking of the raw material of the braided hose 2 to the shape of the mold structure 1as illustrated in Fig.3e.

In Fig.3f, the removal 7 of the positive mold structure 1 is shown in greater details. Therefore the valve 6 of the mold structure 1 is opened and the air inside the positive mold structure 1 deflates which reduces the outer dimension of the mold structure 1. This results in an easy removal 6 of the inner mold structure 1. In one embodiment, the valve 7 of the molded hose 8 is applied to obtain an inflatable molded hose 8.

The valve 7 allows that the molded hose 8 can be provided in a first condition, e.g. an inflated state, in which a compressed fluid is inserted in the molded hose 8 to provide the molded hose 8 in a dimensionally stable form and can further be provided in a second condition, e.g. a deflated stated, in which air is removed from the molded hose 8, e.g. for an easier transportation.

The manufactured molded hose 8 is more stable than hoses that comprise a lengthwise seam, since the material structure of the braided hose 2 has not been ripped and so, it does not comprise weak spots as described above.

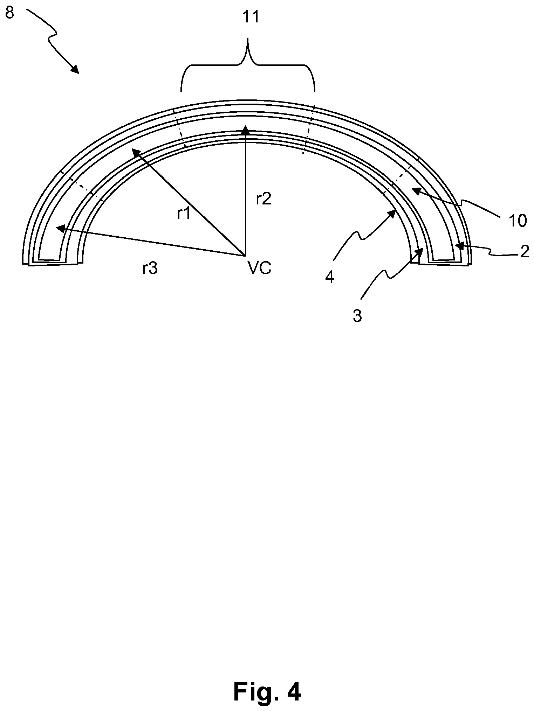

In Fig.4 an exemplary embodiment of a molded hose 8 manufactured according to the invention is shown in a cross section view of the longitudinal alignment of the molded hose 8. Herein a bladder 10 is housed in the molded hose 8. The bladder 10 is used as an air tight barrier. An air tight barrier may be need in case the braided hose 2 is used without any additional layer that has air tightness properties. The bladder 10 increases the air/gas impermeability so that the molded hose 8 in the first condition stays in the first condition namely stays inflated. Additionally, the bladder 10 may be a safety feature to guarantee the dimensionally stable form of the molded hose 8 when inflated. If the molded hose 8 is made by a woven material, e.g. by the braided hose 2, the inner bladder 10 may be the only air barrier layer. The inner bladder 10 can be fixed to the molded hose 8, for instance can be applied to the mold structure 1 before heat appliance or may be inserted after removal 7 of the mold structure 1 and is then fixed using a gluing material. Alternatively, the bladder 10 is arranged freely inside the molded hose 8 and can thus be exchanged easily. As can be seen from Fig.4, the molded hose 8 comprises a plurality of predefined curvatures, which is demonstrated by different curvature radiuses r1, r2 and r3. The term curvatures may be interchanged with the term bending.

According to Fig. 4, the molded hose 8 is segmented into five hose segments also referred to as regions 11. Each region 11 has an individual curvature r1, r2, r3 in view of a virtual center point VC. The molded hose 8 may be symmetrical so that the predefined curvatures r1, r2, r3 of the respective outer hose-region r1, r3 of each side of the molded hose 8 are identical. Alternatively, the molded hose 8 is asymmetric so that the predefined curvatures r1, r2, r3 of the respective outer hose-region r1, r3 of each side of the molded hose 8 are different. Furthermore, the predefined curvatures r1, r2, r3 are directed into different directions. According to Fig.4, the middle hose-segment r2 comprises a smaller curvature than the adjacent outer hose-segments r1, r3, wherein the most outer hose-segments r3 comprises the highest radius value. It should be noted that the radius values and regions 11 are shown as an example only and different arrangements of segmented molded hoses 8 are not excluded from the invention.

When used for kite applications, the molded hose 8 comprises a diameter d that is preferably in the range of 60 Millimeters to 140 Millimeters for kites having a canopy in the range of 5 to 17 square meters. So, the diameter d of the inventive hose 8 is reduced and is at least three times smaller than the tube diameter of conventional kites. This allows a smaller leading edge of the sail which also improves the flight conditions of the kite drastically.

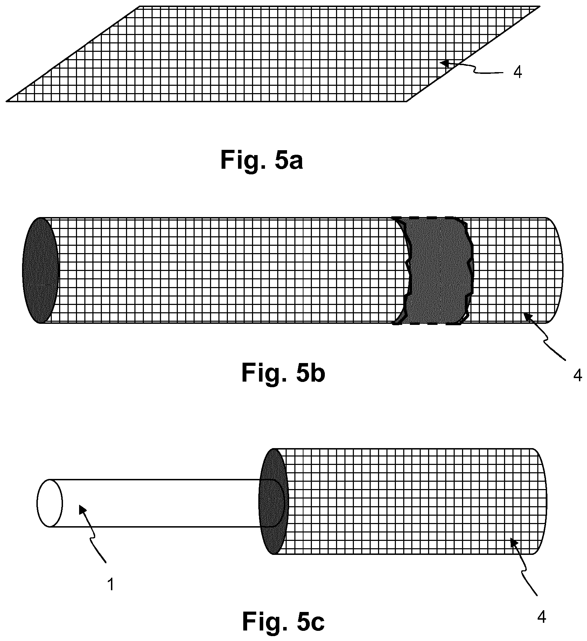

In Fig.5a-5c an exemplary embodiment of a manufacturing process of a molded hose 8 according to the invention is shown.

In Fig.5a the raw material is a thermoformable material 4 that is provided in a flat form, e.g. by an automatic extrusion process. The flat thermoformable material 4 may be applied directly to the positive mold structure 1 as shown in Fig.3a and Fig.3b.

Alternatively and as shown in Fig.5b, the thermoformable material 4 is formed to be a hose, e.g. by a welding process.

This thermoformable hose 4 is then applied to the positive mold structure 1 as shown in Fig.5c. As can be seen in Fig.5c, the outer diameter of the positive mold structure is smaller than the inner diameter of the thermoformable material 4 in hose-form and thus can be applied in quick and easy manner.

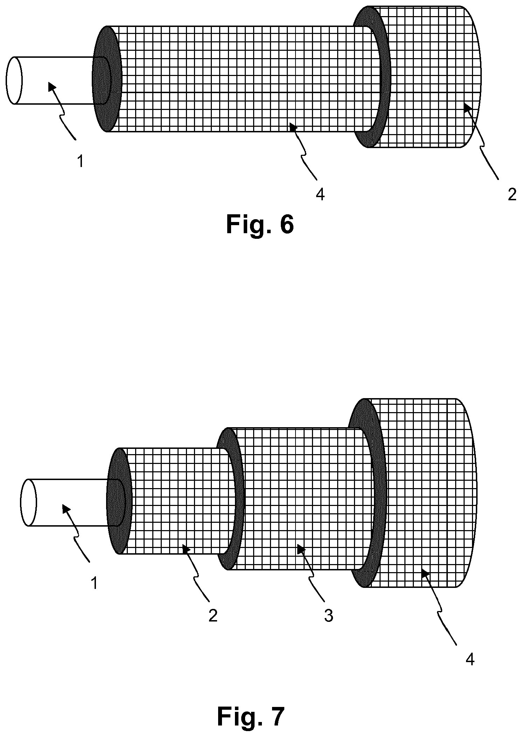

Fig. 6 shows an exemplary embodiment of a molded hose 8 manufactured according to the invention. Here, a thermoformable material 4 in hose-form is applied onto the positive mold structure 1. Subsequently, the braided hose 2 is applied onto the positive mold structure 1. Subsequently (not shown in Fig.6) heat is applied to fit and set the shapes of the thermoformable hose 4 and the braided hose 2 is applied to the outer shape of the positive mold structure 1. The heat is applied only once after appliance of the braided hose 4. A heat activated adhesive 3 (not shown in Fig.6) may additionally be applied before applying the heat. Subsequently (not shown in Fig.6) the mold structure 1 is removed by deflating.

The embodiment according to Fig.6 leads to a more robust molded hose 8. The air tight layer 10 can be avoided in such a scenario, since the thermoformable material 4 has air-tight preferences and so, the molded hose 8 can be filled with compressed fluid without an additional inner bladder.

Fig. 7 shows an exemplary embodiment of a molded hose manufactured according to the invention. The braided hose 2 and a heat-activated adhesive 3 is applied to the positive mold structure 1. Subsequently, heat is applied to set and fit the braided hose 2 to the outer shape of the positive structure 1. Subsequently, a thermoformable hose 4 is applied to the braided hose 2 and the adhesive 3. Subsequently, heat is again applied to set and fit the thermoformable hose 4 to the outer shape of the braided hose 2. Subsequently (not shown in Fig.6) the mold structure 1 is removed by deflating.

The embodiment according to Fig.7 leads to a more robust molded hose 8. The air tight layer 10 can be avoided in such a scenario, since the thermoformable material 4 has air-tight preferences and so, the molded hose 8 can be filled with compressed fluid without an additional inner bladder.

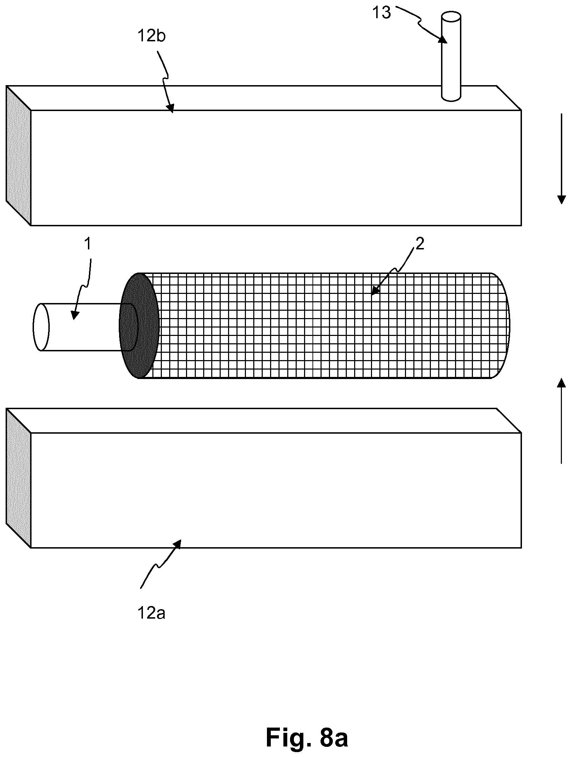

Fig. 8a-8b show an exemplary embodiment a manufacturing process of a molded hose according to the invention.

In Fig,8a the braided hose 2 is applied onto the positive mold structure 1. Subsequently, this arrangement is placed in a negative mold structure 12, which is formed as a lower part 12a and an upper part 12b.

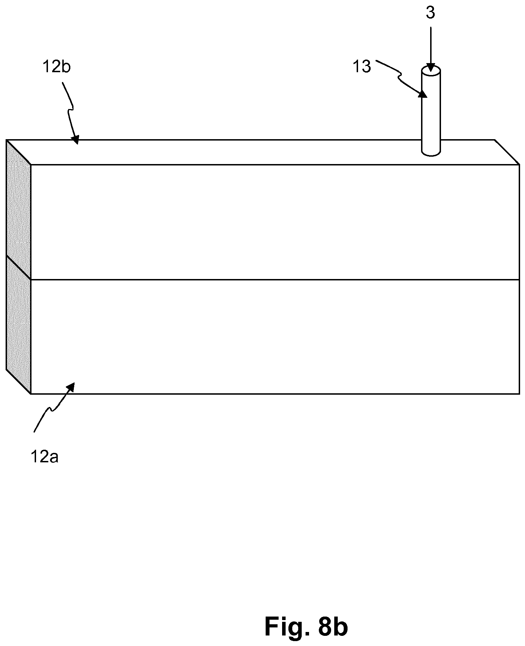

Subsequently, as shown in Fig.8b, the heat activated adhesive 3 is applied via an opening 13 of the negative mold structure 12. The negative mold structure 12 allows the appliance of the adhesive 3 with higher pressure. So, the negative mold structure 12 is applied additionally to the positive mold structure 1 to increase the pressure during the adhesive appliance process.

All features of all embodiments described, shown and/or claimed herein can be combined with each. Embodiments shown in a specific Fig. may be used as intermediate steps for embodiments shown in another Fig. For instance, the negative mold structure 12 of Fig.8a and Fig.8b may be used for appliance of the heat activated adhesive 3 in the embodiments according to Fig.3, Fig.6 and Fig.7. Furthermore, single steps in an embodiment may be interchanged in that the sequence of the steps shown in the embodiment may be changed. Furthermore, single steps in an embodiment may be interchanged with steps of other embodiments.

In Fig. 1, step/box 101 represents `Apply a braided hose and a heat activated adhesive onto a positive mold structure', step/box 102 represents `Apply heat to activate the adhesive for fit-ting and setting the shape of the braided hose to the outer shape of the mold structure', and step/box 103 represents `Remove positive mold structure to obtain a molded hose'.

In Fig. 2, step/box 201 represents `Apply a thermoformable material and a heat activated adhesive onto a positive mold structure', step/box 202 represents `Apply heat for fit-ting and setting the shape of the thermoformable material to the outer shape of the mold structure', and step/box 203 represents `Remove positive mold structure to obtain a molded hose'.

While various embodiments of the present invention have been described above, it should be understood that they have been presented by way of example only, and not limitation. Numerous changes to the disclosed embodiments can be made in accordance with the disclosure herein without departing from the scope of the invention. Thus, the breadth and scope of the present invention should not be limited by any of the above described embodiments. Rather, the scope of the invention should be defined in accordance with the following claims.

### REFERENCE SIGNS

- 1: Positive mold structure
- 2: Braided hose
- 3: Heat-activated adhesive
- 4: Thermoformable material
- 5: Heat appliance
- 6: Valve of mold
- 7: Valve of hose
- 8: Molded hose
- 9: Removing the positive mold structure
- 10: Air barrier layer, bladder
- 11: Region of the molded hose
- 12a,b: Negative mold structure
- 13: Opening
- r1: First predefined curvature
- r2: Second predefined curvature
- r3: Third predefined curvature
- d1: First diameter
- d2: Second diameter

## Claims

1. A method for manufacturing a molded hose (8) comprising the following steps in a sequential manner:
- applying (101) a braided hose (2) and a heat activated adhesive (3) onto an inflatable positive mold structure (1);
- applying (102) heat to the heat-activated adhesive (3) to activate the adhesive (3) for fitting and setting the shape of the braided hose (2) to an outer shape of the positive mold structure (1); and
- removing (103) the positive mold structure (1) for obtaining the molded hose (8) that is dimensionally stable in a first condition of the molded hose (8), wherein the outer shape of the positive mold structure (1) defines the shape of the manufactured molded hose (8) in the first condition;
**characterized in that** the molded hose (8) is provided with endcaps and/or valves to form an inflatable tube.

2. The method according to claim 1, wherein the braided hose (2) is made of yarn.

3. The method according to claim 2, wherein the yarn comprises an adhesive outer layer, so that each yarn of the braided hose (2) is bonded to a neighboring yarn after the appliance (102) of heat to activate the heat-activated adhesive (3).

4. The method according one of the preceding claims, wherein the braided hose (2) comprises low melting bonding yarn.

5. The method according to one of the preceding claims, wherein the positive mold structure (1) comprises a shrinkable, preferably deflatable, element for reducing the dimensions of the outer shape of the positive mold structure (1) and wherein the removing (103, 203) of the positive mold structure (1) includes shrinking, preferably deflating, the positive mold structure (1).

6. The method according to one of the preceding claims, wherein the positive mold structure (1) at least partly comprises one or more of the following shapes:
- a region having a first predefined bending (r1) in its longitudinal alignment;
- a region having a second predefined bending (r2), preferably being located at an end of the positive mold structure (1), more preferably wherein the second predefined bending (r2) is directed to a direction different to the direction of the first predefined bending (r1);
- a region with a changing diameter (d1, d2) across the longitudinal alignment of the positive mold structure (1); and/or
- a cone-shaped region.

7. The method according to one of the preceding claims, wherein:
- a first layer of the braided hose (2) is applied (101, 201) to the positive mold structure (1);
- then heat is applied (102, 202) for fitting the shape of the first layer to the outer shape of the positive mold structure (1);
- then a second layer is applied to the first layer; and
- then heat is again applied to the second layer for fitting the shape of second layer to the shape of the first layer and for bonding them together.

8. The method according to one of the preceding claims, wherein the second layer is an air tight barrier layer, a braided material layer and/or a thermoformable material layer.

9. The method according to one of the preceding claims, wherein a negative mold structure is applied before applying (101) of the heat activated adhesive (3).

10. An inflatable molded hose (8) manufactured according to one of the preceding claims and used for:
- kites;
- paragliders;
- heating or cooling installation;
- water installation;
- vehicles;
- airplanes;
- tents; and/or
- household appliances.

11. A kite or a paraglider, comprising an inflatable molded hose (8) manufactured according to one of the preceding claims 1 to 10.

## Patentansprüche

1. Verfahren zur Herstellung eines Formschlauchs (8), das die folgenden Schritte in einer aufeinanderfolgenden Weise umfasst:
- Aufbringen (101) eines geflochtenen Schlauchs (2) und eines wärmeaktivierten Klebstoffs (3) auf eine aufblasbare positive Formstruktur (1);
- Aufbringen (102) von Wärme auf den wärmeaktivierten Klebstoff (3), um den Klebstoff (3) zu aktivieren, um ihn zu fetten und die Form des geflochtenen Schlauchs (2) an eine äußere Form der positiven Formstruktur (1) anzupassen; und
- Entfernen (103) der positiven Formstruktur (1), um den Formschlauch (8) zu erhalten, der in einem ersten Zustand des Formschlauchs (8) formstabil ist, wobei die äußere Form der positiven Formstruktur (1) die Form des hergestellten Formschlauchs (8) in dem ersten Zustand definiert;
**dadurch gekennzeichnet, dass** der Formschlauch (8) mit Endkappen und/oder Ventilen bereitgestellt ist, um ein aufblasbares Rohr auszubilden.

2. Verfahren nach Anspruch 1, wobei der geflochtene Schlauch (2) aus Garn hergestellt ist.

3. Verfahren nach Anspruch 2, wobei das Garn eine klebende Außenschicht umfasst, so dass jedes Garn des geflochtenen Schlauchs (2) nach dem Aufbringen von Wärme (102) zur Aktivierung des wärmeaktivierten Klebstoffs (3) mit einem benachbarten Garn verbunden wird.

4. Verfahren nach einem der vorstehenden Ansprüche, wobei der geflochtene Schlauch (2) ein niedrig schmelzendes Bindegarn umfasst.

5. Verfahren nach einem der vorstehenden Ansprüche, wobei die positive Formstruktur (1) ein schrumpfbares, vorzugsweise entleerbares Element zur Verringerung der Abmessungen der äußeren Form der positiven Formstruktur (1) umfasst und wobei das Entfernen (103; 203) der positiven Formstruktur (1) ein Schrumpfen, vorzugsweise ein Entleeren, der positiven Formstruktur (1) beinhaltet.

6. Verfahren nach einem der vorstehenden Ansprüche, wobei die positive Formstruktur (1) mindestens teilweise eine oder mehrere der folgenden Formen umfasst:
- einen Bereich, der in seiner Längsausrichtung eine erste vordefinierte Biegung (r1) aufweist;
- einen Bereich, der eine zweite vordefinierte Biegung (r2) aufweist, die sich vorzugsweise an einem Ende der positiven Formstruktur (1) befindet, wobei die zweite vordefinierte Biegung (r2) in eine Richtung gerichtet ist, die sich von der Richtung der ersten vordefinierten Biegung (r1) unterscheidet;
- einen Bereich mit wechselndem Durchmesser (d1, d2) quer zur Längsausrichtung der positiven Formstruktur (1); und/oder
- ein kegelförmiger Bereich.

7. Verfahren nach einem der vorstehenden Ansprüche, wobei:
- eine erste Lage des geflochtenen Schlauches (2) auf die positive Formstruktur (i) aufgebracht wird (101, 201);
- anschließend Wärme aufgebracht wird (102, 202), um die Form der ersten Lage an die äußere Form der positiven Formstruktur (1) anzupassen;
- dann wird eine zweite Schicht auf die erste Schicht aufgebracht; und
- dann wird erneut Wärme auf die zweite Schicht aufgebracht, um die Form der zweiten Schicht an die Form der ersten Schicht anzupassen und um sie miteinander zu verbinden.

8. Verfahren nach einem der vorstehenden Ansprüche, wobei die zweite Schicht eine luftdichte Barriereschicht, eine Schicht aus geflochtenem Material und/oder eine Schicht aus thermoformbarem Material ist.

9. Verfahren nach einem der vorstehenden Ansprüche, wobei vor dem Aufbringen (101) des wärmeaktivierbaren Klebstoffs (3) eine Negativformstruktur aufgebracht wird.

10. Aufblasbarer Formschlauch (8), hergestellt nach einem der vorstehenden Ansprüche und verwendet für:
- Flugdrachen;
- Gleitschirme;
- Heiz- oder Kühlanlagen;
- Wasserinstallation;
- Fahrzeuge;
- Flugzeuge;
- Zelte; und/oder
- Haushaltsgeräte.

11. Drachen oder Gleitschirm, umfassend einen aufblasbaren Formschlauch (8), hergestellt nach einem der vorstehenden Ansprüche 1 bis 10.

## Revendications

1. Procédé pour fabriquer un tuyau moulé (8) comportant les étapes suivantes exécutées de manière séquentielle :
- appliquer (101) un tuyau tressé (2) et un adhésif thermocollant (3) sur une structure de moule positif gonflable (1) ;
- appliquer (102) de la chaleur à l'adhésif thermocollant (3) pour activer l'adhésif (3) pour adapter et définir la forme du tuyau tressé (2) à une forme extérieure de la structure de moule positif (1) ; et
- retirer (103) la structure de moule positif (1) pour obtenir le tuyau moulé (8) qui est dimensionnellement stable dans un premier état du tuyau moulé (8), dans lequel la forme extérieure de la structure de moule positif (1) définit la forme du tuyau moulé (8) fabriqué dans le premier état ;
**caractérisé en ce que** le tuyau moulé (8) est pourvu d'embouts et/ou de valves pour former un tube gonflable.

2. Procédé selon la revendication 1, dans lequel le tuyau tressé (2) est constitué de fil.

3. Procédé selon la revendication 2, dans lequel le fil comporte une couche extérieure adhésive, de sorte que chaque fil du tuyau tressé (2) est lié à un fil voisin après l'application (102) de chaleur pour activer l'adhésif thermocollant (3).

4. Procédé selon l'une des revendications précédentes, dans lequel le tuyau tressé (2) comporte un fil de liage à bas point de fusion.

5. Procédé selon l'une des revendications précédentes, dans lequel la structure de moule positif (1) comporte un élément rétractable, de préférence dégonflable, pour réduire les dimensions de la forme extérieure de la structure de moule positif (1) et dans lequel le retrait (103, 203) de la structure de moule positif (1) inclut la rétraction, de préférence le dégonflage, de la structure de moule positif (1).

6. Procédé selon l'une des revendications précédentes, dans lequel la structure de moule positif (1) comporte au moins partiellement une ou plusieurs des formes suivantes :
- une zone ayant une courbure prédéfinie (r1) dans son alignement longitudinal ;
- une zone ayant une seconde courbure prédéfinie (r2), étant de préférence située à une extrémité de la structure de moule positif (1), de manière plus préférée dans lequel la seconde courbure prédéfinie (r2) est dirigée vers une direction différente de la direction de la première courbure prédéfinie (r1) ;
- une zone avec un diamètre variable (d1, d2) à travers l'alignement longitudinal de la structure de moule positif (1) ; et/ou
- une zone en forme de cône.

7. Procédé selon l'une des revendications précédentes, dans lequel :
- une première couche du tuyau tressé (2) est appliquée (101, 201) à la structure de moule positif (1) ;
- de la chaleur est ensuite appliquée (102, 202) pour adapter la forme de la première couche à la forme extérieure de la structure de moule positif (1) ;
- une seconde couche est ensuite appliquée sur la première couche ; et
- de la chaleur est ensuite de nouveau appliquée à la seconde couche pour adapter la forme de la seconde couche à la forme de la première couche et pour les lier ensemble.

8. Procédé selon l'une des revendications précédentes, dans lequel la seconde couche est une couche barrière étanche à l'air, une couche de matériau tressé et/ou une couche de matériau thermoformable.

9. Procédé selon l'une des revendications précédentes, dans lequel une structure de moule négatif est appliquée avant l'application (101) de l'adhésif thermocollant (3).

10. Tuyau moulé gonflable (8) fabriqué selon l'une des revendications précédentes et utilisé pour :
- des cerfs-volants ;
- des parapentes ;
- une installation de chauffage ou de refroidissement ;
- une installation d'eau ;
- des véhicules ;
- des avions ;
- des tentes ; et/ou
- des appareils domestiques.

11. Cerf-volant ou parapente, comportant un tuyau moulé gonflable (8) fabriqué selon l'une des revendications 1 à 10 précédentes.
